# EUROPÄISCHE PATENTANMELDUNG

(11) **EP 4 685 003 A2**
(43) Veröffentlichungstag der Anmeldung: **28.01.2026**
(21) Anmeldenummer: 25190499.1
(22) Anmeldetag: 18.07.2025
(51) Int. Cl.: B60L 15/20, B60L 15/38, B60L 15/42, B62D 59/04

(54) **VERFAHREN ZUR LEISTUNGSREGELUNG EINES ELEKTROMOTORISCHEN ANTRIEBS EINES NUTZFAHRZEUGS**

(30) Priorität: 23.07.2024 DE 102024120896
(71) Anmelder: Fahrzeugwerk Bernard Krone GmbH & Co. KG, 49757 Werlte (DE)
(72) Erfinder: Göken, Heiko, 49661 Cloppenburg (DE)
(74) Vertreter: Weeg, Thomas

(57) **Zusammenfassung**

Die vorliegende Erfindung bezieht sich auf ein Verfahren zur Leistungsregelung eines elektromotorischen Antriebs (8) eines Nutzfahrzeugs (4), das an eine mit einem Fahrantrieb (6) versehene Zugmaschine (2) angehängt ist.

Um die Antriebsleistung (22) eines elektromotorischen Antriebs (8) eines an eine Zugmaschine (2) angehängten Nutzfahrzeugs (4) an die Antriebsleistung (20) des Fahrantriebs (6) der Zugmaschine (2) anzupassen, wird vorgeschlagen, zur Ermittlung der aktuellen Antriebsleistung (20) des Fahrantriebs (6) der Zugmaschine (2) einen Schwingungssensor (24) zu verwenden, der die vom Verbrennungsmotor der Zugmaschine (2) erzeugten Schwingungen erfasst und die vom Schwingungssensor (24) erfassten Schwingungen als Eingangssignal (26) an eine Steuerungseinrichtung (18) überträgt, die einen Algorithmus (28) zur Auswertung des Eingangssignals (26) aufweist, der aus dem Eingangssignal (26) einen Wert bestimmt, der in die Bestimmung eines die aktuelle Antriebsleistung (20) der Zugmaschine (2) repräsentierenden Wertes einfließt.

## Beschreibung

Die vorliegende Erfindung bezieht sich auf ein Verfahren zur Leistungsregelung eines elektromotorischen Antriebs eines Nutzfahrzeugs, das an eine mit einem Fahrantrieb versehene Zugmaschine angehängt ist, nach dem Oberbegriff des Anspruchs 1 sowie auf ein Nutzfahrzeug mit einem elektromotorischen Antrieb und einer Steuerungseinrichtung zur Steuerung des elektromotorischen Antriebs.

Im Nutzfahrzeugbereich werden zunehmend elektrische Antriebe eingesetzt. Der Einsatz von elektrischen Antrieben beschränkt sich dabei nicht auf Zugmaschinen. Auch an eine Zugmaschine angehängte Fahrzeuge werden heute mit elektrischen Antrieben ausgestattet. Wenn nachfolgend von angehängten Nutzfahrzeugen die Rede ist, so soll dieser Begriff nicht einschränkend auf eine bestimmte Art der technischen Verbindung einer Zugmaschine mit einem davon gezogenen Fahrzeug verstanden werden. So sind damit beispielsweise auch aufgesattelte Nutzfahrzeuge gemeint. Dazu kann es verschiedene Gründe geben, beispielsweise eine Reichweitenverlängerung für das Gespann, eine Verringerung der CO2-Emissionen durch Nutzfahrzeuge, oder eine Traktionsverbesserung. Durch einen eigenen Antrieb für die Räder eines an eine Zugmaschine angehängten Nutzfahrzeugs kann die Zugkraft der Zugmaschine verringert werden, da nun das angehängte Nutzfahrzeug einen Teil der für das Gespann benötigten Antriebsleistung bereitstellt. Über die Rekuperation mittels des elektrischen Antriebs kann beim Bremsen Bewegungsenergie in elektrische Energie umgewandelt werden, die in einer Batterie gespeichert und nach dem Bremsvorgang als Antriebsenergie wieder verfügbar ist. Durch den ergänzenden elektrischen Antrieb eines an eine Zugmaschine angehängten Nutzfahrzeugs können Lastspitzen im Antriebsstrang der Zugmaschine verringert und/oder eine zusätzliche Antriebsleistung bereitgestellt werden, beispielsweise beim Anfahren, Beschleunigen oder bei der Fahrt über ansteigende Straßen. Insbesondere dann, wenn die Zugmaschine mit einem Verbrennungsmotor angetrieben wird, ist es möglich und erstrebenswert, den Verbrennungsmotor auch in diesen Betriebsbedingungen in einem verbrauchsgünstigen Betriebsfenster zu halten. Der Fahrantrieb der Zugmaschine kann aber auch permanent mit einer zur Fahrsituation passenden Leistung unterstützt werden.

Wenn in einem Gespann sowohl die Zugmaschine als auch das angehängte Nutzfahrzeug über einen eigenen Antrieb verfügen, ist es vorteilhaft, wenn die jeweils erzeugten Antriebsleistungen aufeinander abgestimmt werden. Prinzipiell sollte der Antrieb des angehängten Nutzfahrzeugs eine Beschleunigung des Gespanns mittels des Antriebs der Zugmaschine zumindest nicht behindern und gegebenenfalls mit einem eigenen Antriebsmoment fördern. Umgekehrt werden instabile Fahrzustände des Gespanns vermieden, wenn der Antrieb des angehängten Nutzfahrzeugs nicht von hinten aktiv schiebt, wenn die Zugmaschine gebremst wird.

Technisch ist die Synchronisation der Antriebe der Zugmaschine und des angehängten Nutzfahrzeugs unproblematisch, wenn beide Fahrzeuge mit ihren jeweiligen Antrieben ein Fahrzeugsystem bilden, das von Anfang an technisch darauf ausgelegt ist, dass genau diese Zugmaschine mit genau diesem angehängten Nutzfahrzeug zusammen als Gespann betrieben werden. Die Antriebe können dann über eine gemeinsame Steuerungssoftware beispielsweise nach dem Leader-/Follower-Prinzip nach Bedarf entsprechend angesteuert werden, wobei diese Steuerungssoftware dann über eine erste Schnittstelle zur Steuerung und Regelung des Antriebs der Zugmaschine und eine zweite Schnittstelle zur Steuerung und Regelung des Antriebs des angehängten Nutzfahrzeugs verfügt. Der Datenaustausch, die Regelung, die Hardwareschnittstellen und dergleichen müssen auf Basis eines gemeinsamen Standards erfolgen.

Nun besteht im Nutzfahrzeugbereich allerdings das Problem, dass sehr häufig irgendwelche Zugmaschinen unterschiedlicher Hersteller und Fahrzeuggenerationen mit irgendwelchen angehängten Nutzfahrzeugen zu einem Gespann verbunden werden. Das ist beispielsweise, aber nicht nur, im Bereich der Transportlogistik der Fall. So kann beispielsweise eine erste Sattelzugmaschine an einem Vormittag einen ersten Trailer zu einem Lagerhaus bringen. Der erste Trailer wird dort von der ersten Sattelzugmaschine abgekuppelt und bleibt für Be- und Entladezwecke am Lagerhaus stehen. Für die Rückfahrt oder Weiterfahrt der ersten Sattelzugmaschine am Nachmittag wird an diese ein zweiter Trailer angekuppelt, der am Lagerhaus bereits fertig be- oder entladen steht. Wenn der erste Trailer am Lagerhaus fertig be- oder entladen ist, kann der erste Trailer an eine zweite Sattelzugmaschine angekoppelt werden, um mit dieser zu einem neuen Zielort befördert zu werden. Bei dem ersten und zweiten Trailer und der ersten und zweiten Sattelzugmaschine kann es sich um nahezu beliebige unterschiedliche Fabrikate und Modelle handeln. Da es gegenwärtig keine Normen für den Datenaustausch zwischen dem Fahrantrieb einer Zugmaschine und einem elektromotorischen Antrieb eines an die Zugmaschine angehängten Nutzfahrzeugs gibt, bleibt es gegenwärtig dem Zufall überlassen, ob es möglich ist, eine Zugmaschine zusammen mit einem angehängten Nutzfahrzeug zu betreiben, das über einen elektromotorischen Antrieb verfügt. Wenn die ersten und zweiten Trailer über elektromotorische Antriebe verfügen und diese nicht kompatibel sind zum Antrieb der ersten und/oder zweiten Sattelzugmaschine, können die Antriebe der verschiedenen Trailer nicht mehr wechselweise mit den verschiedenen Zugmaschinen betrieben werden. Das würde etablierte Logistikprozesse erheblich durcheinanderbringen und verkomplizieren.

Um solche Nachteile zu vermeiden, ist es wünschenswert, elektromotorische Antriebe von Nutzfahrzeugen, die an eine Zugmaschine angehängt sind, technisch so auszulegen, dass sie mit beliebigen Zugmaschinen kombinierbar und sicher betreibbar sind.

Ein gattungsgemäßes Verfahren ist aus der Schrift WO 2022/074010 A1 bekannt. Dort ist eine sensorische Schraube offenbart, vorzugsweise zur Befestigung eines Königszapfens an einem Sattelauflieger oder einem sonstigen Fahrzeug, die Dehnungen des Schraubenschaftes in Richtung der Schraubenachse erfasst, um auf einfache Weise Daten darüber gewinnen, wie der Königszapfen belastet wird, insbesondere durch die fahrdynamischen Wechselwirkungen zwischen der Zugmaschine und dem Sattelauflieger. Eine Steuereinheit ist dazu ausgebildet, einen Elektromotor eines elektrischen Antriebs des Sattelaufliegers anzusteuern, basierend auf von der zumindest einen sensorischen Schraubverbindung ermittelten Daten, einen Fahrzustand des Sattelaufliegers zu ermitteln, und abhängig von dem ermittelten Fahrzustand den Elektromotor im Vortriebbetrieb, im Generatorbetrieb bei einem Bremsvorgang oder in einem Leerlaufbetrieb zu betreiben. Eine ähnliche Lösung ist in der Schrift DE 10 2017 110 520 A1 beschrieben. Die Leistungsregelung über eine sensorische Erfassung der Belastung des Königszapfens hat allerdings den Nachteil, wegen Störeinflüssen nicht ausreichend genau zu sein, weil nicht die Antriebsleistung des Fahrantriebs, sondern Reaktionskräfte am Königszapfen sensorisch ermittelt und ausgewertet werden.

Es ist die Aufgabe der vorliegenden Erfindung, ein Verfahren vorzuschlagen, mit dem der aktuelle Betriebszustand des Antriebsmotors der Zugmaschine und die dabei von ihm abgegebene Antriebsleistung genauer sensorisch erfasst werden kann, um auf Basis des Sensorwertes die Antriebsleistung des elektromotorischen Antriebs des an die Zugmaschine angehängten Nutzfahrzeugs zu regeln.

Die Aufgabe wird für ein gattungsgemäßes Verfahren durch die kennzeichnenden Merkmale des Anspruchs 1 gelöst. Für ein Nutzfahrzeug mit einem elektromotorischen Antrieb und einer Steuerungseinrichtung zur Steuerung des elektromotorischen Antriebs wird die Aufgabe durch die kennzeichnenden Merkmale des Anspruchs 19 gelöst.

Die Sensorik weist einen Schwingungssensor auf, der die vom Fahrantrieb der Zugmaschine erzeugten Schwingungen erfasst. Über die erfassten Schwingungen kann die aktuell vom Fahrantrieb der Zugmaschine abgerufene Antriebsleistung erkannt und davon abgeleitet die Antriebsleistung des elektromotorischen Antriebs passend geregelt werden. Als Fahrantrieb kommen dabei Antriebssysteme in Betracht, die Schwingungen erzeugen. Schwingungen können beispielsweise von Verbrennungsmotoren erzeugt werden, die zur Erzeugung einer Antriebsenergie einen Kraftstoff verbrennen, aber auch elektrische oder hydrostatische Fahrantriebe erzeugen im Betrieb Schwingungen, die Rückschlüsse auf den aktuellen Betriebszustand und Veränderungen im Betriebszustand zulassen. Auch nebengeordnete Komponenten des Fahrantriebs können Schwingungen erzeugen, die dazu nutzbar sind, die aktuell abgefragte Antriebsleistung zu bestimmen, wie beispielsweise die Schwingungen einer Einspritzpumpe, eines Turboladers, des Abgasstrangs, des Getriebes, von Antriebswellen und dergleichen.

Die Fahrantriebe der Zugmaschinen können typspezifische Schwingungen zeigen, durch deren Auswertung über eine Elektronik die jeweilig verwendete Zugmaschine vom Hersteller und Typ her erkennbar ist. Die Schwingungen von Fahrantrieben stellen quasi einen individualisierbaren Fingerabdruck dar. Aus dem aktuellen Schwingungsbild, das ein Fahrantrieb zeigt, kann auf die aktuell von ihm erzeugte Antriebsleistung rückgeschlossen werden.

Der Fahrantrieb einer Zugmaschine hat im Allgemeinen mindestens drei unterschiedliche Betriebszustände, die auch für die Regelung der Antriebsleistung eines elektromotorischen Antriebs des angehängten Nutzfahrzeugs relevant sind: der Fahrantrieb kann das Gespann beschleunigen, er kann die Zugmaschine momentfrei rollen oder segeln lassen, oder der Fahrantrieb unterstützt eine Verzögerung der Zugmaschine. Diese drei unterschiedlichen Betriebszustände des Fahrantriebs der Zugmaschine können über die Auswertung der Schwingungen oder dessen Emissionen erkannt und für die Regelung der Antriebsleistung des elektromotorischen Antriebs des Nutzfahrzeugs genutzt werden. Bremssignale können über das EBS weitergeleitet werden.

Wenn der Fahrantrieb der Zugmaschine beschleunigt oder abgebremst wird, verändern sich unmittelbar die Schwingungen oder die Emissionen des Fahrantriebs. Durch einen kontinuierlichen Vergleich der Sensorwerte des Schwingungssensors durch die Steuerungseinrichtung wird eine Veränderung des aktuellen Betriebszustands des Antriebsmotors der Zugmaschine sofort erkannt, und zwar sowohl als eine Erhöhung oder eine Verringerung der erzeugten Antriebsleistung als auch die Dynamik der Veränderung als eine schwächere oder stärkere Beschleunigung oder eine geringere oder höhere Reduzierung der Antriebsleistung.

Bei den vom Schwingungssensor erfassten Schwingungen kann es sich um solche handeln, deren Frequenz in einem für Menschen hörbaren Bereich liegen. Das ist beispielsweise bei Tönen der Fall, die zwischen 16 Hz bis 20 kHz liegen. Der Schwingungssensor kann aber auch ergänzend oder alternativ darauf ausgelegt sein, Schwingungen zu messen, die außerhalb des für einen Menschen hörbaren Bereichs liegen. So kann der Schwingungssensor beispielsweise darauf ausgelegt sein, Körperschall zu messen.

Die vom Fahrantrieb der Zugmaschine im Fahrbetrieb erzeugten Schwingungen bieten eine gute Datenbasis, um den aktuellen Betriebszustand des Fahrantriebs der Zugmaschine zu bestimmen. Je nachdem, auf welche Leistungsabgabe der Fahrantrieb der Zugmaschine aktuell eingestellt ist, ergibt sich ein für genau diese Leistungsabgabe des Fahrantriebs charakteristisches Schwingungsbild. Noch genauer und zeitlich dazu etwas früher stellt ein Algorithmus einen aus den Schwingungen abgeleiteten Sollwert für die Antriebsleistung zur Verfügung, wenn aus den Schwingungen ein Wert für die aktuelle Leistungsanforderung an den Fahrantrieb ausgewertet wird. So wird bei einem Verbrennungsmotor das Verbrennungsgeräusch wegen der zusätzlich eingespritzten Kraftstoffmengen lauter und härter, wenn ein Fahrer Gas gibt, ohne dass sich deswegen sofort die Motordrehzahl und/ oder die Fahrgeschwindigkeit der Zugmaschine deutlich verändern. Aus Vereinfachungsgründen ist hier von der aktuellen Leistungsabgabe des Fahrantriebs die Rede, wobei damit begrifflich auch eine Schwingungsanalyse von einzelnen Schwingungen mitumfasst ist, die darauf abzielt, die aktuelle Leistungsanforderung an den Fahrantrieb zu bestimmen. Aus dem jeweiligen Schwingungsbild kann die aktuelle Antriebsleistung des Fahrantriebs abgeleitet werden, um daraus wiederum den Bedarf an Antriebsleistung aus dem elektromotorischen Antrieb des angehängten Nutzfahrzeugs zu bestimmen.

Die Beurteilung des Betriebszustands des Fahrantriebs anhand der sensorischen Erfassung von Schwingungen ist auch deshalb vorteilhaft, weil sich die Schwingungen vom Ort ihrer Entstehung aus ausbreiten und diese deshalb auch an einer anderen Stelle, die vom Ort der Entstehung der Schwingungen am Fahrantrieb der Zugmaschine entfernt sein kann, in einer für Auswertungszwecke ausreichenden Qualität erfasst werden können. Geeignete Schwingungssensoren, deren Sensordaten dazu dienen, die Antriebsleistung des Fahrantriebs der Zugmaschine zu bestimmen, können beispielsweise im Bereich des an die Zugmaschine angehängten Nutzfahrzeugs angeordnet sein. Die Schwingungssensoren können beispielsweise Körperschall und/oder akustischen Schall erfassen. Die von den Schwingungssensoren generierten Sensorwerte können von einer mit den Schwingungssensoren verbundenen und auf dem angehängten Nutzfahrzeug angeordneten Steuerungseinrichtung ausgewertet werden. Es ist aber auch alternativ oder ergänzend möglich, einen oder mehrere Schwingungssensoren an der Zugmaschine anzuordnen. Die von diesen an der Zugmaschine angeordneten Schwingungssensoren generierten Sensorwerte können über ein Verbindungskabel oder kabellos über eine Funkverbindung an die Steuerungseinrichtung übertragen werden. Ein über ein Kabel mit der Steuerungseinrichtung verbundener Schwingungssensor kann beispielsweise im stirnseitigen Bereich des angehängten Nutzfahrzeugs vorgehalten werden. Bei Nichtgebrauch wird er dort in einer Halterung gehalten. Ist das Nutzfahrzeug an eine Zugmaschine angehängt, kann der Schwingungssensor aus der Halterung entnommen und an der Zugmaschine befestigt werden, beispielsweise am Rahmen oder an der Sattelplatte einer Sattelkupplung. Die Befestigung kann über Magnete oder sonstige Befestigungstechnik erfolgen. Im Ergebnis werden der Steuerungseinrichtung, die sich bevorzugt auf dem an eine Zugmaschine angehängten Nutzfahrzeug befindet, Sensordaten über Schwingungen und/oder die Emissionen des Fahrantriebs der Zugmaschine übermittelt.

Die Steuerungseinrichtung kann über ein entsprechendes Softwareprogramm darauf ausgelegt sein, Veränderungen in den übermittelten Sensordaten innerhalb eines Zeitintervalls zu überwachen und aus Veränderungen der ermittelten Schwingungen innerhalb des ausgewerteten Zeitintervalls Rückschlüsse darüber abzuleiten, mit welcher Antriebsleistung der elektromotorische Antrieb des Nutzfahrzeugs betrieben werden sollte. So lässt beispielsweise ein kontinuierlicher Anstieg der Drehzahl des Fahrantriebs der Zugmaschine innerhalb des ausgewerteten Zeitintervalls auf einen Beschleunigungsvorgang schließen, bei dem eine zusätzliche Antriebsleistung durch den elektromotorischen Antrieb des angehängten Nutzfahrzeugs erwünscht ist. Anzumerken ist an dieser Stelle, dass bei einer Auswertung der Drehzahl des Motors nur der aktuelle Ist-Zustand ermittelt wird. Über die Auswertung des Vibrationsverhaltens, das beispielsweise von der Menge des für einen Arbeitstakt in den Brennraum eines Zylinders des Antriebsmotors eingespritzten Kraftstoffmenge abhängig ist, kann schon vor einer tatsächlichen Änderung der Drehzahl des Antriebsmotors erkannt werden, welche Leistung des Fahrantriebs vom Fahrer gewünscht wird. Umgekehrt lässt ein kontinuierlicher Abfall der Drehzahl des Fahrantriebs der Zugmaschine innerhalb des ausgewerteten Zeitintervalls oder ein weniger hartes Verbrennungsgeräusch aufgrund einer geringeren Kraftstoffmenge pro Zündung auf einen Bremsvorgang oder zumindest keine höhere aktuelle Leistungsanforderung schließen, bei dem eine zusätzliche Antriebsleistung durch den elektromotorischen Antrieb des angehängten Nutzfahrzeugs unerwünscht ist. Eine Information über einen eingeleiteten Bremsvorgang kann der Algorithmus aber auch schon über die EBS-Daten und/oder ein Bremssignal erhalten. Die EBS-Daten können zuverlässiger sein als eine Drehzahlüberwachung, weil die Motordrehzahl absinkt, sobald der Fahrer auskuppelt oder eine Automatik den Motor auskuppelt, beispielsweise beim antriebslosen Rollen oder Segeln, bei dem aber noch eine Antriebsunterstützung durch den elektromotorischen Antrieb des Nutzfahrzeugs gewünscht ist. Die Steuerungseinrichtung kann auf Basis solcher Informationen die aktuelle Antriebsleistung des elektromotorischen Antriebs des angehängten Nutzfahrzeugs entsprechend anpassen. Je nach Ausführung kann der Algorithmus nur auf die Daten aus der Schwingungsanalyse zugreifen, aber auch noch auf weitere am angehängten Nutzfahrzeug verfügbare Daten, die auf eine gewünschte Veränderung der angeforderten Antriebsleistung schließen lassen.

Bei einer Auswertung der vom Fahrantrieb der Zugmaschine erzeugten Schwingungen als Datenbasis, um den aktuellen Betriebszustand des Fahrantriebs der Zugmaschine zu beurteilen, ist eine Datenverbindung zwischen dem Fahrantrieb der Zugmaschine und dem elektromotorischen Antrieb des an die Zugmaschine angehängten Nutzfahrzeugs nicht erforderlich, um den elektromotorischen Antrieb eines Nutzfahrzeugs, das an eine Zugmaschine angehängt ist, an den Fahrantrieb der Zugmaschine anzupassen. Die Schwingungsauswertung zwischen der Zugmaschine und dem angehängten Nutzfahrzeug reicht für eine solche Anpassung aus. Es ist auch keine besondere Einbindung der Steuerungseinrichtung zur Regelung des elektromotorischen Antriebs des Nutzfahrzeugs in die Steuerungseinrichtung des Antriebs der Zugmaschine erforderlich. Beide Steuerungseinrichtungen können zumindest digital weiterhin autark und getrennt voneinander betrieben werden. Dabei ist es für die Funktion allerdings günstig, wenn sich das Steuerungssystem des angehängten Nutzfahrzeugs an das Steuerungssystem der Zugmaschine anpasst und nicht in völliger Autonomie agiert. Dieser Umstand ermöglicht es, dass ein angehängtes Nutzfahrzeug, das einen eigenen elektromotorischen Antrieb aufweist, mit jeder beliebigen Zugmaschine kombiniert werden kann, ohne dass diese Zugmaschine technisch in irgendeiner Weise darauf vorbereitet ist, zusammen mit diesem Nutzfahrzeug als Gespann betrieben zu werden, das einen eigenen elektromotorischen Antrieb aufweist. Es ist also nicht erforderlich, dass eine Zugmaschine eine Schnittstelle zum Datenaustausch mit der Steuerungseinrichtung zur Regelung des elektromotorischen Antriebs des angehängten Nutzfahrzeugs aufweist, und die in den jeweiligen Steuerungseinrichtungen verwendeten Standards müssen ebenfalls nicht aufeinander abgestimmt sein. Die Leistungsregelung des elektromotorischen Antriebs eines an eine Zugmaschine angehängten Nutzfahrzeugs auf Basis einer Messung von Schwingungen, die der Fahrantrieb der Zugmaschine erzeugt, ist deshalb eine gute Brückentechnologie, um die mit einem elektromotorischen Antrieb ausgestatteten angehängten Nutzfahrzeuge mit beliebigen Zugmaschinen betreiben zu können, solange noch keine definierten Schnittstellen und Standards für die Übertragung von Daten über die aktuellen Soll- und Ist-Leistungen des Fahrantriebs der Zugmaschine und des elektromotorischen Antriebs des angehängten Nutzfahrzeugs festgelegt sind.

Die vom Schwingungssensor erfassten Schwingungen werden als Eingangssignal an eine Steuerungseinrichtung übertragen, die einen Algorithmus zur Auswertung des Eingangssignals aufweist. Der Algorithmus bestimmt aus dem Eingangssignal einen Wert, der die aktuelle Antriebsleistung der Zugmaschine repräsentiert. Der Fahrantrieb der Zugmaschine und der elektromotorische Antrieb des Nutzfahrzeugs sind also über den Wert, der die aktuelle Antriebsleistung der Zugmaschine repräsentiert, als Leader- (die Zugmaschine) und Follower- (das angehängte Nutzfahrzeug) System organisiert, bei dem die Regelung der Antriebsleistung des elektromotorischen Antriebs des Nutzfahrzeugs abhängig ist von der aktuellen Antriebsleistung des Fahrantriebs der Zugmaschine. Der die aktuelle Antriebsleistung der Zugmaschine repräsentierende Wert ist eine variable Eingangsgröße für ein Softwareprogramm, mit dem der Sollwert der Antriebsleistung des elektromotorischen Antriebs des angehängten Nutzfahrzeugs in Abhängigkeit vom jeweiligen Wert, der die aktuelle Antriebsleistung der Zugmaschine repräsentiert, bestimmt wird. Prinzipiell setzt sich der Eingangswert für den Inverter der Antriebsregelung aus mehreren Werten zusammen und basiert nicht nur auf dem abgeleiteten Wert der Vibrationsmessung. Der Algorithmus ist ein Bestandteil eines Softwareprogramms, das in der Steuerungseinrichtung betrieben wird, um die Antriebsleistung des elektromotorischen Antriebs des Nutzfahrzeugs zu regeln.

Über die Messung der vom Fahrantrieb erzeugten Schwingungen ist es möglich, die aktuelle Antriebsleistung der Zugmaschine eines Gespanns zu bestimmen und auf dieser Basis einen dazu passenden Sollwert für die Antriebsleistung des elektromotorischen Antriebs des Nutzfahrzeugs festzulegen. Diese Mess- und Auswertungsmethode liefert genauere Ergebnisse als das aus dem Stand der Technik vorbekannte Messverfahren. Die Messmittel sind zuverlässig, langzeitstabil und nicht verschleißbehaftet.

Wenn in der vorliegenden Anmeldung von einer Zugmaschine die Rede ist, so kann es sich dabei um eine Sattelzugmaschine, ein Nutzfahrzeug mit einer Deichselkupplung, einen Pkw mit einer Anhängerkupplung, einen landwirtschaftlichen Traktor, eine Baumaschine oder ein sonstiges Nutzfahrzeug handeln, an das ein Nutzfahrzeug angehängt werden kann. Wenn in der vorliegenden Anmeldung von einem an eine Zugmaschine angehängten Nutzfahrzeug die Rede ist, so kann damit ein Trailer oder Sattelauflieger, ein mit einer Deichsel versehener Anhänger, eine Arbeitsmaschine oder ein sonstiges angehängtes Nutzfahrzeug gemeint sein, das mit einem eigenen elektromotorischen Antrieb versehen ist. Der elektromotorische Antrieb kann auf ein einzelnes Rad, auf eine einzelne Achse, auf mehrere Räder oder mehrere Achsen wirken. Der elektromotorische Antrieb kann einen oder mehrere Elektromotoren aufweisen, die von der Steuerungseinrichtung gesteuert werden. Der elektromotorische Antrieb beinhaltet auch eine Energiequelle, mit dem der oder die Elektromotoren betrieben werden. Bei der Energiequelle kann es sich beispielsweise um eine Batterie handeln, in der Strom zum Antrieb der Elektromotoren gespeichert wird. Die Energie kann aber auch mittels einer Brennstoffzelle oder einer externen Energiequelle, wie beispielsweise einer Oberleitung über der Fahrbahn oder Induktionsschleifen, die in der Fahrbahn verlegt sind, oder von einem Energieerzeuger oder Energiespeicher auf der Zugmaschine bereitgestellt werden. Der elektromotorische Antrieb umfasst dann die Übertragungsmittel, mit denen die elektrische Energie in das angehängte Nutzfahrzeug übernommen und an die Elektromotoren weitergeleitet wird.

Wenn in der vorliegenden Beschreibung von einem Schwingungssensor die Rede ist, so ist diese Angabe nicht als eine Beschränkung auf einen einzigen Schwingungssensor zu verstehen. Zur Messung von Schwingungen können auch mehrere Schwingungssensoren miteinander kombiniert werden. Bei mehreren Schwingungssensoren muss es sich nicht zwangsläufig um denselben Sensortyp handeln. Es können auch unterschiedliche Sensoren verwendet werden, die unterschiedliche Schwingungen messen, wobei die Sensorsignale der mehreren Schwingungssensoren vom Algorithmus ausgewertet und in die Bestimmung eines die aktuelle Antriebsleistung der Zugmaschine repräsentierenden Wertes einfließen. Bei der Auswertung der Sensorsignale des Schwingungssensors können auch die Messdaten von anderen Sensoren berücksichtigt werden, die in dem angehängten Nutzfahrzeug angeordnet sind.

Wenn in der vorliegenden Beschreibung von einem Algorithmus die Rede ist, so kann ein solcher Algorithmus auch aus mehreren, aufeinander aufbauenden Algorithmen zusammengesetzt sein. So kann beispielsweise zwischen einem Funktionsalgorithmus, der aus den eingehenden Sensorsignalen einen die aktuelle Antriebsleistung der Zugmaschine repräsentierenden Wert errechnet, und einem Sicherheitsalgorithmus, der nur die Plausibilität der verwendeten Daten und die betriebssichere Funktion des Funktionsalgorithmus überwacht, unterschieden werden. Auch diese beiden Algorithmen können wiederum in verschiedene Teilalgorithmen unterteilt sein.

Nach einer Ausgestaltung der Erfindung ist der Schwingungssensor darauf ausgelegt, einen akustischen Schall und/oder einen Körperschall zu erfassen. Für die Messung von akustischen Schall und von Körperschall sind geeignete Sensoren aus dem Stand der Technik bekannt. Physikalisch können die Sensoren beispielsweise kapazitiv, piezoelektrisch, optisch oder induktiv arbeiten. Aufgrund der Verfügbarkeit, Kosten und Lebensdauer erscheinen heute insbesondere piezoelektrische Sensoren für die Messung von Körperschall als geeignet. Für die Schallmessung aus der Luft sind induktive Sensoren geeignet. Weitere physikalische Messprinzipien sind möglich. Der Schwingungssensor kann das Geräusch des Fahrantriebs der Zugmaschine beispielsweise mittels eines Mikrofons messen. Bei der Körperschallmessung, die beispielsweise über einen Beschleunigungsmesser oder über einen Klopfsensor erfolgen kann, können aber auch die Schwingungen gemessen werden, die sich vom Fahrantrieb auf den Rahmen der Zugmaschine und über den Königszapfen auf den Rahmen des an die Zugmaschine angehängten Nutzfahrzeugs übertragen.

Nach einer Ausgestaltung der Erfindung bereiten der Schwingungssensor und/oder der Algorithmus das Eingangssignal durch Hochpass- und/oder Tiefpassfilter auf. Der Algorithmus kann auf der Steuerungseinheit gespeichert sein. Über die Filterung des Eingangssignals ist es möglich, bei der Auswertung der erfassten Schwingungen Störgrößen herauszufiltern. Es ist vorteilhaft, bei der Auswertung nur diejenigen Frequenzbänder zu betrachten, in denen typischerweise Schwingungen auftreten, die für die Beurteilung der Antriebsleistung des Fahrantriebs der Zugmaschine relevant sind. Die Filter können sowohl analog als auch digital durch mathematische Algorithmen abgebildet werden.

Nach einer Ausgestaltung der Erfindung ist der Algorithmus darauf ausgelegt, aus dem Eingangssignal bestimmte Frequenzbereiche einer Auswertung zu unterziehen. Das kann analog mittels Filtern und/oder digital durch entsprechende mathematische Algorithmen erfolgen. So erzeugen beispielsweise die Kolben und Zündungen eines Verbrennungsmotors während seines Betriebs auswertbare Schwingungen in bestimmten Frequenzbereichen. Aber auch Nebenaggregate eines Verbrennungsmotors, wie beispielsweise ein Turbolader, das Abgassystem oder eine Einspritzpumpe, erzeugen in bestimmten Frequenzbereichen auswertbare Schwingungen. Durch die Beobachtung genau dieser Frequenzbereiche kann die aktuelle Antriebsleistung des Fahrantriebs ermittelt werden. Es wird auch Rechenaufwand gespart und die Rechengeschwindigkeit erhöht, weil nur die Schwingungen in den vorbestimmten Frequenzbereichen mit dem Algorithmus ausgewertet werden.

Nach einer Ausgestaltung der Erfindung ist der Algorithmus darauf ausgelegt, das Eingangssignal mittels einer Fourier-Transformation zu zerlegen. Bei der Fourier-Transformation handelt es sich um einen mathematischen Prozess, bei dem ein zeitdiskretes Signal in seine Frequenzanteile zerlegt und analysiert wird. Sie ermöglicht es, das Signal aus der Zeitdomäne in die Frequenzdomäne zu übertragen und umgekehrt, wodurch die Analyse und Verarbeitung von Signalen erleichtert wird. Die Fourier-Transformationen gibt es in verschiedenen Ausgestaltungen. Alternativ könnten auch Wavelet-, diskrete, Real-, einfache, schnelle Fourier-Transformationen und Spektral-Funktionen genutzt werden.

Nach einer Ausgestaltung der Erfindung wertet der Algorithmus das Eingangssignal auf darin enthaltene Frequenzen und Amplituden aus. Es erfolgt eine Zerlegung des Gesamtsignals in seine Einzelsignale. In diesen kann dann nach Mustern gesucht werden, aus denen die aktuelle Antriebsleistung des Fahrantriebs abgeleitet werden kann. Die Auswertung kann eine Analyse beinhalten, welche Frequenzen und Amplituden die gemessenen Schwingungen haben, die in dem übermittelten Eingangssignal enthalten sind. Eine solche Auswertung ist eine offene Auswertung, die auf einer ersten Stufe alle im übermittelten Eingangssignal enthaltenen Frequenzen und Amplituden wahrnimmt und diese dann nachfolgend auswertet. Je nachdem, welche Frequenzen und Amplituden in dem Eingangssignal enthalten sind, lässt das schon Rückschlüsse zu, ob es sich um Schwingungen handelt, die einem Fahrantrieb zugeordnet werden können und mit welcher aktuellen Antriebsleistung dieser arbeitet. Die Auswertungen kann aber auch ergänzend oder alternativ das Eingangssignal darauf untersuchen, ob darin bestimmte Frequenzen und Amplituden enthalten sind. Bei einer solchen geschlossenen Auswertung von vorbestimmten Frequenzen sucht der Algorithmus also, ob in dem Eingangssignal bestimmte Frequenzen und Amplituden enthalten sind, die eine Erkennung des Fahrantriebs und dessen aktuelle Antriebsleistung ermöglichen. Eine solche Untersuchung kann dazu dienen, zu prüfen, ob die im Eingangssignal enthaltenen Frequenzen und Amplituden überhaupt ausreichen, um einen Fahrantrieb zu erkennen und dessen aktuelle Antriebsleistung zu bestimmen.

Nach einer Ausgestaltung der Erfindung wertet der Algorithmus das Eingangssignal auf eine Periodizität und/oder zeitliche Änderungen von Frequenzen und Amplituden aus. Bei dieser Auswertung wird eine zeitdynamische Analyse der Eingangssignale vorgenommen, bei der in einem Zeitintervall mehrere Eingangssignale zwischengespeichert und miteinander verglichen werden. Bei der Auswertung auf eine Periodizität wird untersucht, ob sich Schwingungen innerhalb des Zeitintervalls in bestimmten Frequenzen und Amplituden regelmäßig und immer genau gleich wiederholen. Auch kann eine Frequenzverschiebung, beispielsweise durch eine Erhöhung der Motordrehzahl, in Kombination mit einer Amplitudenspitze, beispielsweise durch die Verstärkung der Vibration durch die Last des Motors, durch den Algorithmus zur erfolgreichen Identifikation der verschiedenen Fahrzustände herangezogen werden. Bei der Auswertung von zeitlichen Änderungen von Frequenzen und Amplituden werden in einer ersten Stufe Änderungen erkannt und in einer zweiten Stufe mit dem Algorithmus bewertet. Fehlt es an einer regelmäßigen Wiederholung bestimmter Frequenzen und Amplituden in einem ausgewerteten Zeitintervall, oder haben sich diese im betrachteten Zeitintervall in eine bestimmte Richtung verändert, kann das als Hinweis dafür gewertet werden, dass sich die aktuelle Antriebleistung des Fahrantriebs verändert hat, und zwar hin zu einer höheren oder niedrigeren Antriebsleistung. Eine solche Veränderung kann vom Algorithmus als Hinweis verarbeitet werden, auch die Antriebsleistung des elektromotorischen Fahrantriebs des angehängten Nutzfahrzeugs in gleicher Weise mit einer Erhöhung oder Verringerung zu ändern. Die dynamische Analyse der Eingangssignale in einem Zeitintervall ist auch im Rahmen einer Plausibilitätsprüfung vorteilhaft. Fallen bestimmte Frequenzen und Amplituden in einem Zeitintervall vollständig aus oder weisen diese Sprünge auf, die im Schwingungsverhalten eines Fahrantriebs unwahrscheinlich sind, so kann das als Hinweis verarbeitet werden, dass Sensorfehler vorliegen und/oder die gemessenen Schwingungen nicht von einem Fahrantrieb stammen und deshalb bei der Bestimmung der Antriebleistung des elektromotorischen Antriebs des Nutzfahrzeugs vom Algorithmus unberücksichtigt bleiben.

Nach einer Ausgestaltung der Erfindung wertet der Algorithmus das Eingangssignal durch eine Fuzzy Logic-Analyse aus. Anders als die herkömmliche Boolesche Logik basiert Fuzzylogik auf unscharfen Mengen, den Fuzzy-Mengen. In der Fuzzy Logic-Analyse wird die Zugehörigkeit nicht durch eine ja/nein-Unterscheidung scharf definiert, sondern ist graduell abgestuft. Das geschieht durch Zugehörigkeitsfunktionen, die jedem Element einen numerischen Wert aus einem Intervall als Zugehörigkeitsgrad zuordnen. Die so eingeführten neuen Mengenoperationen definieren die Operationen eines zugehörigen Logikkalküls, der die Modellierung von Inferenzprozessen erlaubt. Die gemessenen Frequenzen und Amplituden können auf diese Weise als dem Fahrantrieb zugehörig oder nicht dem Fahrantrieb zugehörig identifiziert werden. Genauso ist es über die Fuzzy-Logic-Analyse möglich, die Werte der aktuellen Schwingungen als Hinweise auszuwerten, die auf eine erhöhte Antriebsleistung des Fahrantriebs hinweisen, auf eine verringerte oder eine gleich bleibende Antriebsleistung. Die Fuzzy Logic-Analyse kann mit einer Analyse mit einer Booleschen Logik kombiniert oder in eine solche eingebunden genutzt werden.

Nach einer Ausgestaltung der Erfindung ist der Algorithmus darauf ausgelegt, über eine Schnittstelle zusätzlich Zustandsgrößen des angehängten Nutzfahrzeugs zu erfassen und in die Bestimmung eines die aktuelle Antriebsleistung der Zugmaschine repräsentierenden Wertes und/oder des Signals zur Anpassung der Antriebsleistung des elektromotorischen Antriebs einzubeziehen. Über die Schnittstelle wird der Algorithmus mit der Elektronik des angehängten Nutzfahrzeugs vernetzt. Die Schnittstelle kann dabei so eingerichtet sein, dass der Algorithmus nur die Möglichkeit erhält, in einem Busnetz verfügbare Informationen mitzulesen, oder für den Algorithmus relevante Informationen werden über die Schnittstelle nur von einem oder mehreren Netzknoten wie beispielsweise einem Netzknoten für das EBS an den Algorithmus weitergeleitet. Die Schnittstelle kann aber auch so ausgestaltet sein, dass der Algorithmus über die Schnittstelle Daten in die Elektronik des angehängten Nutzfahrzeugs, beispielsweise ein Busnetz, einspeisen kann. Es mag zwar schwierig sein, den Algorithmus zur Leistungsregelung eines elektromotorischen Antriebs eines Nutzfahrzeugs mit der Elektronik des Fahrantriebs von einer beliebigen Zugmaschine zu vernetzen, weil die Standards dafür fehlen. Das hindert aber nicht daran, dem Algorithmus durch seine Vernetzung mit der Elektronik des angehängten Nutzfahrzeugs Zustandsgrößen verfügbar zu machen, die jedenfalls in der Elektronik des angehängten Nutzfahrzeugs vorhanden und die für die Bestimmung der aktuellen Antriebsleistung der Zugmaschine hilfreich sind. Die Elektronik des angehängten Nutzfahrzeugs hat nämlich Daten verfügbar, die eine Zugmaschine nach UN ECE-Normen für ein angehängtes Nutzfahrzeug über ein Busnetz standardmäßig bereitstellen muss, und die über die Schnittstelle auch für den Algorithmus verfügbar sind. Die Erfassung zusätzlicher Zustandsgrößen des angehängten Nutzfahrzeugs kann dabei auf bestimmte Informationen beschränkt sein, die nur einen Teil der nach ISO 11992-2 verfügbaren Informationen ausmachen.

Als Beispiel sind hier Daten aus einem elektronischen Bremssystem EBS eines angehängten Nutzfahrzeugs zu nennen. Ein EBS für ein Nutzfahrzeug, das an eine Zugmaschine anhängbar ist, hat insbesondere den Vorteil, dass die Steuerungseinrichtung über eine standardisierte Anhängerschnittstelle nach ISO 11992 mit einer Zugmaschine verbunden werden kann und darüber für den sicheren Betrieb des angehängten Nutzfahrzeugs wichtige Daten von der Zugmaschine erhält, die sonst für eine Leistungsregelung eines elektromotorischen Antriebs eines angehängten Nutzfahrzeugs nicht standardisiert verfügbar sind. Die Datenübertragung erfolgt im Allgemeinen über einen 7-poligen 24V ABS/EBS Steckverbinder, der nach ISO 7638-1 genormt ist. Die ABS/EBS/ADR-Steckverbinder werden in nahezu jeder Art Nutzfahrzeug mit ABS/EBS-System verwendet. Sie sind für Normal- und ADR-Anwendungen erhältlich. Informationen, welche in der Norm ISO 11992-2 vorgesehen sind, werden über verschiedene UN ECE- Regulatorien verpflichtend von der Zugmaschine an ein angehängtes Nutzfahrzeug gesendet und stehen somit verlässlich zur Verfügung.

Als wichtigstes Signal ist hier das Bremssignal zu nennen, das der Fahrer der Zugmaschine über das Bremspedal generiert. Die Anhängeransteuerung bei Bremsvorgängen kann sowohl elektronisch über die Anhängerschnittstelle als auch pneumatisch über das elektropneumatische Anhängersteuerventil erfolgen. Das elektronische oder pneumatische Signal umfasst eine Information über den jeweiligen Bremsdruck, das je nach Größe das Ausmaß einer vom Fahrer gewünschten Verringerung der Fahrgeschwindigkeit indiziert. Über die Schnittstelle zum EBS kann der Algorithmus für die Leistungsregelung des elektromotorischen Antriebs des Nutzfahrzeugs über eine Bremsverzögerung des Gespanns informiert werden. Ein Bremssignal, das dem Algorithmus über die Schnittstelle übermittelt wird, kann vom Algorithmus unmittelbar zu einem Signal zu einer zum Bremssignal passenden Leistungsreduzierung des elektromotorischen Antriebs weiterverarbeitet werden. Die Hoheit der Bremse der Zugmaschine kann auf diese Weise auch für die Leistungsregelung des elektromotorischen Antriebs eines angehängten Nutzfahrzeugs im Algorithmus sichergestellt werden.

Ein EBS enthält als eine Grundfunktion die Funktionalität eines ABS. Die Verzögerungsregelungsfunktion dient der Anpassung des Bremsdruckniveaus an die vom Fahrer vorgegebene Abbremsung. Über Drehzahlsensoren, die für die integrierte ABS-Funktion an den Fahrzeugrädern des angehängten Nutzfahrzeugs montiert sind, erhält das EBS permanent aktuelle Informationen über die Radgeschwindigkeiten und damit über die aktuelle Fahrgeschwindigkeit des angehängten Nutzfahrzeugs. Die Bremsverzögerung wird über Änderung der Radgeschwindigkeiten über Drehzahlsensoren erfasst. Die Auswertung der Sensorsignale ergibt ein genaues Bild über den Schlupf jeder Achse und damit auch über ihre Bremsleistung. Ist der Schlupf unterschiedlich, trägt eine Achse stärker als die andere zur Abbremsung bei. Ein EBS kann mittels einer Differenzschlupfregelung den Druck an jeder Achse oder auch an jedem Rad so regeln, dass die Bremskräfte optimal verteilt werden. Es ist natürlich auch möglich, dass nicht jedes Rad über einen Drehzahlsensor verfügt und einzelnen gebremst werden kann. Die Bremsregelung erfolgt dann seitenweise oder achsweise. Die ABS-Regelungsfunktion kann über die Schnittstelle zum Algorithmus auch bei der Regelung der Antriebsleistung des elektromotorischen Antriebs eines angehängten Nutzfahrzeugs berücksichtigt werden. Insbesondere können auch Informationen über die aktuelle Fahrgeschwindigkeit vom Algorithmus in die Leistungsregelung für den elektromotorischen Antrieb übernommen werden.

Obwohl die Koppelkraft zwischen den Fahrzeugen eines Gespanns üblicherweise nicht direkt sensiert wird, sind die Anhängersteuerung und die Bremskraftregelung in Zugmaschinen so aufeinander abgestimmt, dass Koppelkräfte reduziert werden. Auch solche Regelungsvorgänge können über die Schnittstelle über Zustandsgrößen des angehängten Nutzfahrzeugs im Algorithmus über die Leistungsregelung des elektromotorischen Antriebs berücksichtigt werden.

In ein EBS sind darüber hinaus noch verschiedene weitere Bremsenmanagementfunktionen integriert, die Abweichungen vom normalen Fahrzustand erkennen und bei Gefährdungen in das Fahrgeschehen eingreifen. Die Funktion einer elektronischen Stabilitätsregelung - ESC- dient dem Zweck, ein Gespann bei Manövern zu stabilisieren, beispielsweise bei Kurvenfahrten oder beim Spurwechseln. Insbesondere bei Nutzfahrzeugen bergen diese Manöver die Gefahr des Kippens, Rollens, Schleuderns und Einknickens aufgrund des höheren Schwerpunkts und höheren Gewichts. Um instabile Fahrzustände erkennen zu können, verfügen EBS-Systeme über zumindest einen Neigungssensor. Mit Hilfe der Informationen aus dem Neigungssensor, aber auch weiterer verschiedener Sensoren erkennt ein ESC solche kritischen Situationen und greift, wenn nötig, korrigierend in Motor- und Bremsleistung ein. Ein ESC-Signal kann über die Schnittstelle auch vom Algorithmus zur Leistungsregelung des elektromotorischen Antriebs weiterverarbeitet werden. Eine ESC-Regelung dient einerseits der Spurstabilität und enthält dafür eine Gierregelung. Diese Funktion wird aktiviert, sobald das Fahrzeug in kritischen Situationen die Kurvenstabilität verliert und das Fahrzeug nicht mehr der vom Fahrer vorgegebenen Richtung folgt, beispielsweise während eines plötzlichen Spurwechsels. Die beabsichtigte Fahrtrichtung wird über einen Lenkwinkelsensor erkannt. Die entstehende Gierbewegung bei Kurvenfahrt wird von einem im ESC-Modul integrierten Gierratensensor gemessen und mit der auf Basis der vom Fahrer beabsichtigten Richtung errechneten zu erwartenden Gierrate verglichen. Im Fall einer Abweichung zwischen gemessener und beabsichtigter Gierrate verwendet die Gierregelung das EBS, um die Bremskräfte an den einzelnen Rädern und die Antriebsleistung des Fahrantriebs so zu modifizieren, dass die Gefahr des Verlustes der Spurstabilität bei Manövern zur Vermeidung einer Kollision mit Hindernissen verringert wird. Das ESC verhindert durch die gleichzeitige angepasste Bremsung des Anhängers ein mögliches "Einknicken" des Zuges. Eine weitere Funktion des ESC ist der Umkippschutz. Diese Funktion wird automatisch aktiviert, wenn die Querbeschleunigung des Fahrzeugs kritische Werte erreicht und das Fahrzeug droht umzukippen. Der Umkippschutz erkennt eine kritische Querbeschleunigung über entsprechende Sensoren und verwendet das EBS, um die Bremskräfte und Antriebsleistung des Fahrantriebs so zu modifizieren, dass die Umkippgefahr über eine Verringerung der Fahrzeuggeschwindigkeit und gegebenenfalls ein gezieltes Abbremsen einzelner Räder reduziert wird. Die kritische Querbeschleunigung ist abhängig von der erkannten Fahrsituation und den jeweiligen Lastbedingungen. Die Bremssteuerung für den Umkippschutz betätigt bei Bedarf die Bremsen der Achsen oder der Räder des angehängten Nutzfahrzeugs und gegebenenfalls auch der Zugmaschine.

Bei gleicher Pedalbetätigung durch einen Fahrer kann ein EBS außerdem dafür sorgen, dass das Fahrzeug unabhängig vom Beladungszustand, der über Lastsensoren erkannt wird, wie beispielsweise einem Drucksensor in Federbälgen, stets gleichstark abbremst. Ein EBS kann bei feuchten Bremsbelägen den Bremsdruck erhöhen, bis die gewünschte Abbremsung erreicht wird. Neben dem Sicherheitsgewinn werden durch bestimmte Funktionen Fahrkomfort und Belagverschleiß optimiert. Eine separate Achslastsensierung zur Bremskraftregelung ist mit entsprechenden Sensoren und den von ihnen generierten Achslastsignalen möglich. Eine genauere Kenntnis über den Verschleißzustand der Bremsen kann ein EBS über analoge Belagverschleißsensoren gewinnen. Die Bremsbelagverschleißregelung greift bei unkritischer Bremsung und einem erfassten Belagunterschied zwischen den verschiedenen Achsen regulierend in die Bremsdruckverteilung ein. Ein Bremsassistent unterstützt den Fahrer bei Vollbremsungen, indem er eine starke Bremsung erkennt und - egal ob das Bremspedal komplett betätigt ist oder nicht - den vollen Bremsdruck in die Bremszylinder leitet. An diese Regelungsvorgänge kann sich die Steuerungseinrichtung für die Leistungsregelung des motorischen Antriebs des Nutzfahrzeugs anpassen, wenn die entsprechenden im EBS vorhandenen Daten über die Schnittstelle an den Algorithmus übertragen werden. Erst wenn der Fahrer das Bremspedal löst, beendet der Bremsassistent den Bremsvorgang. Auch das Ende des Bremsvorgangs ist ein Signal, das über die Schnittstelle an die Steuerungseinrichtung übermittelt werden kann, die dann wiederum die Leistungsregelung des motorischen Antriebs des angehängten Nutzfahrzeugs über den Algorithmus auf einen zur aktuellen Fahrsituation passenden Level der Leistungsregelung anhebt. Der passende Level der Leistungsregelung muss dabei nicht bedeuten, dass der elektromotorische Antrieb wieder aktiv antreibt. Beim sogenannten Brake-Blending könnte das Anheben beispielsweise auch durch eine Verringerung der ausgeführten Rekuperation erfolgen.

Ein EBS kann eine automatische Rollsperrenfunktion bieten, die dem Fahrer ein komfortableres Anfahren an Steigungen ermöglicht, indem sie das Rückwärtsrollen des Fahrzeuges verhindert. Schleppmomente im Antriebsstrang können durch Schaltvorgänge oder Gaswechsel auftreten. Die dadurch entstehenden Bremsmomente können zum Blockieren der Antriebsräder führen, so dass Fahrzeuginstabilitäten auftreten. Die Schleppmomentenregelung verhindert diesen Zustand. Wird ein definierter Schlupfzustand überschritten, so wird in Abhängigkeit von den Radgeschwindigkeiten der Antriebsräder mit einem Signal an eine Motor-Steuerungseinrichtung das Motormoment erhöht und somit die auftretenden Schleppmomente abgebaut. Die Schleppmomentenregelung ist beendet, wenn an den Antriebsrädern wieder stabile Werte vorliegen. Ein EBS kann zudem über eine Kontrolle des Antriebsschlupfs verfügen. Ist das Antriebsdrehmoment an den Rädern größer als die Haftreibung der Räder, entsteht ein zu großer Schlupf, und die Räder drohen durchzudrehen. Die Antriebsschlupf-Kontroll-Funktion erkennt die Tendenz des Durchdrehens und passt das Antriebsmoment über ein Signal an eine Motor-Steuerungseinrichtung an. Wenn nur ein Rad zum Durchdrehen tendiert, wird eine Differenzialbremsung angewendet. Die Daten, die für die vorgenannten Funktionen in einem EBS verfügbar sind, können über die Schnittstelle dem Algorithmus für Auswerte- und Regelungsprozesse verfügbar gemacht und vom Algorithmus zu einem angepassten Signal für die Antriebsleistung des motorischen Antriebs weiterverarbeitet werden.

Über ein EBS, aber auch unabhängig vom EBS können die vorstehend aufgeführten Sensordaten, aber auch noch über entsprechende auf dem angehängten Nutzfahrzeug vorhandene weitere Sensordaten, über weitere fahrrelevante Zustände über die Schnittstelle dem Algorithmus verfügbar gemacht werden. Dabei kann es sich beispielsweise noch um Daten über die Außentemperatur und/oder die Windrichtung und/oder Windstärke handeln. Durch die kombinierte Nutzung der Vibrations- und/oder Schwingungsanalyse mit vorhandenen Zustandsgrößen des angehängten Nutzfahrzeugs, wie beispielsweise der Raddrehzahl, aktuell gefahrenen Geschwindigkeit, Neigung, Beschleunigung, Achslast kann anhand mathematischer Modelle, aber auch durch selbstlernende neuronale Netze auf die momentane Antriebsleistung der Zugmaschine geschlossen werden und in Abhängigkeit von der aktuellen Antriebsleistung des Fahrantriebs der Zugmaschine die Antriebsleistung eines elektromotorischen Antriebs des Nutzfahrzeugs geregelt werden. Ein technischer Eingriff in die Zugmaschine oder ein aktiver Austausch digitaler Informationen ist dafür nicht notwendig.

Nach einer Ausgestaltung der Erfindung ist der Algorithmus darauf ausgelegt, bereitgestellte Zustandsgrößen bedarfsweise in einen Wert für die Beschleunigungsleistung und/oder eine Neigung des angehängten Nutzfahrzeugs und/oder ein Gesamtgewicht und/oder einen statischen Rollwiderstand des angehängten Nutzfahrzeugs zu verrechnen und zumindest einen dieser Werte bei der Bestimmung eines die aktuelle Antriebsleistung der Zugmaschine repräsentierenden Wertes und/oder des Signals zur Anpassung der Antriebsleistung des elektromotorischen Antriebs zu verwenden. Die Zustandsgrößen können über die Schnittstelle bereitgestellt sein, es ist aber auch möglich, dem Algorithmus weitere Zustandsgrößen über gesonderte Sensoren verfügbar zu machen, die an die Steuerungseinrichtung angeschlossen sind, wie beispielsweise ein Neigungssensor, ein Gyroskop, und dergleichen. Wie vorstehend beschrieben werden die Zustandsgrößen über Sensoren erfasst, und die von den Sensoren ermittelten Sensorwerte werden direkt oder indirekt, insbesondere auch in verarbeiteter Form, über die Schnittstelle dem Algorithmus übermittelt oder in Zwischenwerte verrechnet, die dann über die Schnittstelle dem Algorithmus übermittelt werden. Wenn die Sensorwerte nicht in einen Wert für die Beschleunigungsleistung und/oder eine Neigung des angehängten Nutzfahrzeugs und/oder ein Gesamtgewicht und/oder einen statischen Rollwiderstand des angehängten Nutzfahrzeugs verrechnet sind, kann dies durch den Algorithmus erfolgen. Der Algorithmus verwendet dann zumindest einen dieser Werte bei der Bestimmung eines die aktuelle Antriebsleistung der Zugmaschine repräsentierenden Wertes und/oder des Signals zur Anpassung der aktuellen Antriebsleistung des motorischen Antriebs des Nutzfahrzeugs. Einer dieser Werte kann auch dazu genutzt werden, den aktuellen Kraftbedarf für die Antriebsleistung des motorischen Antriebs des Nutzfahrzeugs zu bestimmen und/oder eine Obergrenze der aktuellen Antriebsleistung des motorischen Antriebs des Nutzfahrzeugs festzulegen und diese Werte bei der Bestimmung des Wertes zur nutzen, den die Steuerungseinrichtung als Signal zur Anpassung der aktuellen Antriebsleistung an den motorischen Antrieb des Nutzfahrzeugs generiert und übermittelt.

Nach einer Ausgestaltung der Erfindung drosselt die Steuerungseinrichtung den elektromotorischen Antrieb des Nutzfahrzeugs in einer Initiierungsphase auf eine reduzierte Antriebsleistung oder sie schaltet den elektromotorischen Antrieb inaktiv. Mit dem Begriff der Initiierungsphase ist der Zeitraum gemeint, den der Algorithmus ab einem Startzeitpunkt der Software benötigt, um die Antriebsleistung des elektromotorischen Antriebs funktions- und betriebssicher regeln zu können. In der Initiierungsphase muss der Algorithmus insbesondere erkennen, mit welchem Fahrantrieb die Zugmaschine ausgestattet ist und mit welcher Antriebsleistung dieser aktuell arbeitet. Die von den Schwingungssensoren erfassten und als Eingangssignal übermittelten Schwingungen müssen auf Plausibilität und Verwertbarkeit überprüft werden. Zusätzlich muss der Algorithmus aber auch erkennen, in welchem Fahrzustand sich das an die Zugmaschine angehängte Nutzfahrzeug befindet. Erst wenn der Algorithmus diese Punkte mit positivem Ergebnis abgearbeitet hat, ist es möglich, den elektromotorischen Antrieb des Nutzfahrzeugs mit einer normalen Antriebsleistung zu betreiben. Wenn der elektromotorische Antrieb während der Initiierungsphase inaktiv bleibt oder nur mit einer reduzierten Antriebsleistung betrieben wird, werden instabile Zustände des Gespanns in diesem Zeitraum vermieden.

Nach einer Ausgestaltung der Erfindung generiert der Algorithmus in einer Initiierungsphase zumindest ein fahrzeugspezifisches Schwingungsprofil. Die Initiierungsphase kann mit der Überprüfung beginnen, ob die Zugmaschine, mit der das angehängte Nutzfahrzeug losfährt, der Steuerungseinrichtung bekannt ist und die Steuerungseinrichtung vielleicht sogar auf diese Zugmaschine mit einem bereits abgespeicherten fahrzeugspezifischen Schwingungsprofil eingerichtet ist. Falls das der Fall ist, kann dieses fahrzeugspezifische Schwingungsprofil aktiviert und die Initiierungsphase beschleunigt werden.

Findet die Steuerungseinrichtung für die aktuell genutzte Zugmaschine kein passendes fahrzeugspezifisches Schwingungsprofil oder kann sie die Zugmaschine nicht anhand ihres individuellen Schwingungsprofils zweifelsfrei identifizieren, kann die Initiierung fortgesetzt werden. Die Steuerungseinrichtung kann auch in einen Simulationsmodus wechseln, der beispielsweise den elektromotorischen Antrieb so steuert, dass dieser nur den reinen statischen Rollwiderstand des angehängten Nutzfahrzeugs kompensiert. Im Simulationsmodus kann für eine aktuelle Zugmaschine auch ein Schwingungsprofil ausgewählt werden, das zu den Eingangssignalen am besten passt und das dann von der Steuerungseinrichtung und dem Algorithmus für die weitere Auswertung des Eingangssignals verwendet wird. Bei einer initialen Referenzfahrt des Gespanns aus einer Zugmaschine und einem daran angehängten Nutzfahrzeug werden das Eingangssignal und die übrigen verfügbaren Zustandsdaten des angehängten Nutzfahrzeugs erzeugt und vom Algorithmus verarbeitet. Der Algorithmus gleicht bei der initialen Referenzfahrt, die verschiedene Geschwindigkeits-, Beschleunigungs- und Lastbereiche abdecken sollte, das Eingangssignal und die übrigen verfügbaren Zustandsdaten des angehängten Nutzfahrzeugs nach einem mathematischen Modell miteinander ab und stellt diese aufeinander ein. Der Algorithmus weist sodann bestimmten Werten aus dem Eingangssignal, insbesondere bestimmten Frequenzen und Amplituden der im Eingangssignal enthaltenen Sensorwerte des Schwingungssensors, bestimmte Werte einer Soll-Antriebsleistung des elektromotorischen Antriebs des Nutzfahrzeugs zu. Auf diese Weise wird ein fahrzeugspezifisches Schwingungsprofil erstellt, bei dem bestimmten Werten aus dem Eingangssignal und eventuell zusätzlich verarbeiteten weiteren Daten von Zustandsgrößen des angehängten Nutzfahrzeugs eine dazu passende Soll-Antriebsleistung zugeordnet ist. Der Algorithmus kann dann am Ende der initialen Referenzfahrt mit dem fahrzeugspezifischen Schwingungsprofil nach der Art einer wenn/dann-Verknüpfung die Antriebsleistung des elektromotorischen Antriebs des Nutzfahrzeugs automatisch regeln. Das fahrzeugspezifische Schwingungsprofil kann vom Algorithmus in der Steuereinrichtung dauerhaft gespeichert werden, sodass es für spätere Fahrten zur Aktualisierung und zum Gebrauch zur Verfügung steht. Die Länge der initialen Referenzfahrt kann vom Erreichen einer vorher definierten Güte des Schwingungsprofils abhängig sein. Der Algorithmus kann darauf programmiert sein, eine selbstprüfende Validierung des fahrzeugspezifischen Schwingungsprofils vorzunehmen.

Der Algorithmus kann zusätzlich oder alternativ eine Programmroutine aufweisen, in der bei einer initialen Referenzfahrt zunächst nur eine Art Fingerabdruck der vom Fahrantrieb der Zugmaschine erzeugten Schwingungen erzeugt wird und dieser Fingerabdruck dazu genutzt wird, routinemäßig zu überprüfen, ob in der Steuerungseinrichtung ein passendes fahrzeugspezifisches Schwingungsprofil abgespeichert ist, um durch die Aktivierung eines passenden Schwingungsprofils die Initiierungsphase abzukürzen. Wenn die Steuerungseinrichtung über eine Funkverbindung mit dem Internet verbunden ist, kann der erzeugte Fingerabdruck auch dazu dienen, über eine auf einem Server vorgehaltene Datenbank nach einem passenden fahrzeugspezifischen Schwingungsprofil zu suchen und dieses auf die Steuerungseinrichtung herunterzuladen und im Algorithmus zu aktivieren, wenn ein solches in der Datenbank gefunden wird.

Im laufenden Betrieb eines Gespanns können neben der Kalibrierung des Systems in einer initialen Referenzfahrt weitere Kalibrierungen vorgesehen sein, um das fahrzeugspezifische Schwingungsprofil in einem selbstlernenden Prozess zu verbessern. Über eine Vernetzung der Steuerungseinrichtung mit dem Internet und Servern, auf denen fahrzeugspezifische Schwingungsprofile für den automatisierten Zugriff abgespeichert sind, können einzelne fahrzeugspezifische Schwingungsprofile auch dort abgespeichert, aufbereitet, verbessert und durch den Abgleich mit fahrzeugspezifischen Schwingungsprofilen aus anderen Nutzfahrzeugen optimiert werden. Die Verbesserung der fahrzeugspezifischen Schwingungsprofile erfolgt dabei nach Art eines neuronalen Netzes. Die Optimierung der fahrzeugspezifischen Schwingungsprofile können auch über den Einsatz von Kl erfolgen, wobei dann die KI-optimierten fahrzeugspezifischen Schwingungsprofile im Internet für den automatisierten Download durch die jeweiligen Steuereinrichtungen der angehängten Nutzfahrzeuge zur Verfügung stehen.

Im Algorithmus kann ein festes mathematisches Regelungsmodell einen bestimmten Betriebs- oder Ausgabebereich begrenzen, in dem ein Wert liegen kann, der in die Bestimmung eines die aktuelle Antriebsleistung der Zugmaschine repräsentierenden Wertes einfließt. Ein solches festes mathematisches Regelungsmodell limitiert den Bereich, in dessen Rahmen die Antriebsleistung der Zugmaschine variabel ist. Das feste mathematische Regelungsmodell kann darauf ausgelegt sein, für die Antriebsregelung relevante Informationen situationsadäquat abzuarbeiten. Beispielhaft sind hier die aktuelle Beladung des angehängten Nutzfahrzeugs, Außentemperaturen oder aktuelle Straßenverhältnisse genannt. Aufbauend darauf kann ein KI-System auf einer neuronalen Ebene innerhalb der Grenzen einen optimierten Wert der Unterstützungsleistungen ermitteln.

Nach einer Ausgestaltung der Erfindung weist die Steuerungseinrichtung eine Schnittstelle zur Zugmaschine auf, über die Betriebsdaten der Zugmaschine an die Steuerungseinrichtung übertragbar sind, und der Algorithmus ist darauf ausgelegt, dass über die Schnittstelle zur Zugmaschine eingelesene Betriebsdaten der Zugmaschine in die Bestimmung eines die aktuelle Antriebsleistung der Zugmaschine repräsentierenden Wertes und/oder des Signals zur Anpassung der Antriebsleistung des elektromotorischen Antriebs einfließt. Die Schnittstelle kann direkt oder indirekt ausgestaltet sein. Diese Lösung ist für den Fall relevant, dass ein technisches Mittel zur Verfügung steht, mit dem im elektronischen Busnetz der Zugmaschine vorhandene Daten, die für die Funktion des Algorithmus vorteilhaft zu gebrauchen sind, ausgelesen und an die Steuerungseinrichtung des angehängten Nutzfahrzeugs übermittelt werden können, sei es kabelgestützt oder drahtlos. So sind heute bereits Diagnosestecker an CAN-Bussystemen von Zugmaschinen vorhanden, an die Diagnosegeräte anschließbar sind, über die Daten aus dem CAN-Busnetz ausgelesen werden können. Die bekannten Diagnosegeräte können zu einem Datenlesegerät weiterentwickelt werden, das bestimmte vom Algorithmus benötigte Daten aus dem Busnetz der Zugmaschine ausliest und diese an den Algorithmus über die Schnittstelle übermittelt. Eine weitere standardisierte Schnittstelle ist die Flotten-Management-Schnittstelle FMS, die in schweren Nutzfahrzeugen verfügbar ist. Alle Daten dieser Schnittstelle werden im Broadcast-Modus vom Fahrzeug gesendet. Die Daten sind gemäß SAE J1939 codiert. Die Sendewiederholrate der Daten liegt je nach Typ zwischen 20 ms und 10 sec. Auch die Daten der FMS können über die Schnittstelle an die Steuerungseinrichtung übermittelt werden. Damit die Steuerungseinrichtung die über die Schnittstelle verfügbaren Daten verarbeiten kann, weist der Algorithmus eine entsprechende Programmierung zum Datenimport über die jeweilige Schnittstelle auf.

Damit sind herstellerübergreifende Telematikanwendungen und Auswertungen der Daten möglich. Dabei ist es möglich, dass über die Schnittstelle nicht alle Daten zur Verfügung stehen, die der Algorithmus für einen sicheren Betrieb benötigt. Der Algorithmus ist dann darauf ausgelegt, sich die für einen sicheren Betrieb benötigten und noch fehlenden Daten auf anderem Weg zu beschaffen oder zu substituieren oder abzuleiten, beispielsweise über das EBS oder unabhängig davon am angehängten Nutzfahrzeug und/oder an der Zugmaschine angeordnete Sensoren. Die Schnittstelle ist auch für den Fall interessant, wenn zu einem späteren Zeitpunkt eine normierte Schnittstelle zur Datenübertragung von Daten verfügbar ist, die für die Regelung der Antriebsleistung eines elektromotorischen Antriebs nutzbar sind. Wenn die Steuerungseinrichtung mit einer solchen Schnittstelle ausgestattet ist, kann das angehängte Nutzfahrzeug wahlweise mit einer Zugmaschine, die eine solche normierte Schnittstelle aufweist, oder einer Zugmaschine, die eine solche Schnittstelle nicht aufweist, betrieben werden. Der Algorithmus kann so programmiert werden, dass er in Abhängigkeit von aktuell verfügbaren Daten unterschiedliche Programmroutinen durchläuft, in denen die Qualität der verfügbaren Daten über eine entsprechende Priorisierung und Gewichtung berücksichtigt ist.

Nach einer Ausgestaltung der Erfindung weist der Algorithmus einen mathematischen Regler zur Schwingungsdämpfung auf, mit dem der die aktuelle Antriebsleistung der Zugmaschine repräsentierende Wert und/oder das Signal zur Anpassung der Antriebsleistung des elektromotorischen Antriebs korrigiert wird. Bei der Regelung der Antriebsleistung des elektromotorischen Antriebs des Nutzfahrzeugs ist zu berücksichtigen, dass nicht nur der elektromotorische Antrieb des Nutzfahrzeugs, sondern auch der Fahrantrieb der Zugmaschine ein eigenständiges Regelungssystem darstellt, das mit einer variablen Antriebsleistung betrieben wird. Wenn der elektromotorische Antrieb des Nutzfahrzeugs an die variable Antriebsleistung der Zugmaschine angepasst werden soll, die unabhängig von der Antriebsleistung des elektromotorischen Antriebs variabel ist, so kann es dazu kommen, dass sich die beiden Systeme in ihrer jeweiligen Regelung gegenseitig aufschaukeln. Um ein solches Aufschaukeln zu verhindern, ist es vorteilhaft, im Algorithmus einen mathematischen Regler zur Schwingungsdämpfung zu verwenden, mit dem eine Aufschaukelneigung verringert oder ganz unterbunden wird. Als mathematischer Regler zur Schwingungsdämpfung können beispielsweise ein PID-Regler oder eine Signaldämpfung verwendet werden. Über solche Regler ist eine weichere Synchronisation von zwei autarken Regelungssystemen miteinander möglich.

Nach einer Ausgestaltung der Erfindung ist der Schwingungssensor im vorderen Bereich des angehängten Nutzfahrzeugs und/oder an der Zugmaschine positioniert. Durch die Position möglichst nahe am Fahrantrieb der Zugmaschine werden die Störeinflüsse möglichst geringgehalten. Am angehängten Nutzfahrzeug kann der Schwingungssensor beispielsweise am Rahmen oder am Kingpin befestigt sein, um Körperschall zu messen. An der Zugmaschine kann der Schwingungssensor am Rahmen, der Sattelplatte oder an Komponenten des Fahrantriebs befestigt sein. Wenn der Schwingungssensor akustischen Schall erfassen soll, kommen auch andere Befestigungsorte nahe zur Antriebseinheit der Zugmaschine in Betracht. Der Schwingungssensor kann ortsfest oder demontierbar am angehängten Nutzfahrzeug oder an der Zugmaschine befestigt sein. Der Schwingungssensor kann insbesondere auch über eine werkzeuglos funktionierende Befestigungstechnik mit der Zugmaschine oder dem angehängten Nutzfahrzeug verbunden sein. Als Beispiele lassen sich hier eine Befestigung über einen Magneten, eine Klemm- oder Rastverbindung nennen.

Nach einer Ausgestaltung der Erfindung weist der Algorithmus eine Schnittstelle zur Eingabe oder Auswahl von Regelungsstrategien auf. Die Inhalte der Regelungsstrategien sind abhängig von dem Ziel, das mit der jeweiligen Regelungsstrategie verfolgt wird. So kann es das vorrangige Ziel sein, einen möglichst großen Teil einer Fahrtstrecke mit elektrischer Energie zurückzulegen. Ein anderes Ziel kann es sein, in der Umgebung der Start- und Zielorte mit einem möglichst hohen Stromanteil und dazwischen mit einem hohen Anteil von fossiler Energie zu fahren. Es ist auch möglich, die gespeicherte Energie gleichmäßig über eine vorbekannte gesamte Fahrstrecke abzugeben. Eine auswählbare Strategie kann auch darauf gerichtet sein, die vorhandene elektrische Restenergiemenge bis zur nächsten Ladestation aufzubrauchen oder bis zum nächsten Ladevorgang eine Restmenge von beispielsweise 20 % der Speicherkapazität im Speicher zu behalten. Es ist auch eine Regelungsstrategie möglich, bei der die Schallemissionen des Gespanns unter einem vorgegebenen Grenzwert gehalten werden oder der elektromotorische Antrieb georeferenziert vorrangig oder ausschließlich im Stadtverkehr genutzt wird. Der elektromotorische Antrieb kann auch für eine Strategie zur Unterstützung dynamischer Lastwechsel anstelle einer konstanten Antriebsleistung genutzt werden. Nach der Eingabe oder Auswahl einer Regelungsstrategie kann der Algorithmus den elektromotorischen Antrieb des Nutzfahrzeugs entsprechend regeln.

Nach einer Ausgestaltung der Erfindung weist der Algorithmus eine Bremsvorrangsteuerung auf, in der die Regelung der Antriebsleistung des elektromotorischen Antriebs bei Vorliegen eines Bremssignals an den Bremsvorgang angepasst ist. Wenn eine Zugmaschine abgebremst wird, geschieht das sehr häufig in Verkehrssituationen, in denen durch die Bremsung ein Unfall vermieden werden soll. Bremsvorgänge sind also fast immer sicherheitsrelevant. Das gilt umso mehr, je heftiger ein Bremsvorgang ausgeführt wird. Das Bremssignal kann über einen mit dem Algorithmus verbundenen Beschleunigungssensor erkannt werden, oder es wird dem Algorithmus über eine Schnittstelle vom EBS übermittelt. Das Bremssignal kann als HIGH/LOW-Signal vorliegen. In Abhängigkeit von dem vorliegenden Bremssignal kann der Algorithmus den elektromotorischen Antrieb des Nutzfahrzeugs deaktivieren oder in einen Rekuperations-Modus umschalten, in dem der elektromotorische Antrieb des Nutzfahrzeugs Bewegungsenergie in elektrische Energie umwandelt, die in den elektrischen Speicher geladen wird, aus dem der elektromotorische Antrieb mit Energie versorgt wird. Der elektromotorische Antrieb unterstützt auf diese Weise einen Bremsvorgang. Durch die Bremsvorrangsteuerung werden eventuelle Fehlinterpretationen aus der Schwingungsanalyse mit dem Bremssignal übersteuert, in Bremssituationen behält dadurch der Fahrer die Systemhoheit über die Fahrbewegungen des Gespanns. Über die Bremsvorrangsteuerung können auch Fehlinterpretationen aus der Schwingungsanalyse mit dem Algorithmus erkannt werden. Fehler werden erkannt, wenn der Algorithmus beispielsweise eine Beschleunigung erkennt, der Fahrer aber bremst. Die Diagnose von Fehlinterpretationen kann zur Korrektur oder Abschaltung der Schwingungsanalyse oder zur Umschaltung der Steuerungseinheit in einen Notlauf genutzt werden.

Nach einer Ausgestaltung der Erfindung berechnet der Algorithmus bei der Bestimmung eines Sollwerts für die Antriebsleistung des elektromotorischen Antriebs einen dynamischen oder statischen Wert für den Rollwiderstand und gibt einen Sollwert aus, der unterhalb des errechneten Wertes für den Rollwiderstand liegt. Die Berechnung des dynamischen Wertes für den Rollwiderstand kann mittels Daten über die aktuell gefahrene Geschwindigkeit, den Reifendruck, das aktuelle Gewicht des angehängten Nutzfahrzeugs, den aktuellen Windwiderstand, die Fahrzeugneigung und/oder Wettereinflüsse wie die Temperatur, Regen oder Schnee, erfolgen. Wenn der vom Algorithmus ausgegebene Sollwert unterhalb des errechneten Wertes für den Rollwiderstand liegt, wird vermieden, dass das angehängte Nutzfahrzeug die Zugmaschine schiebt, was zu instabilen Fahrzuständen führen kann.

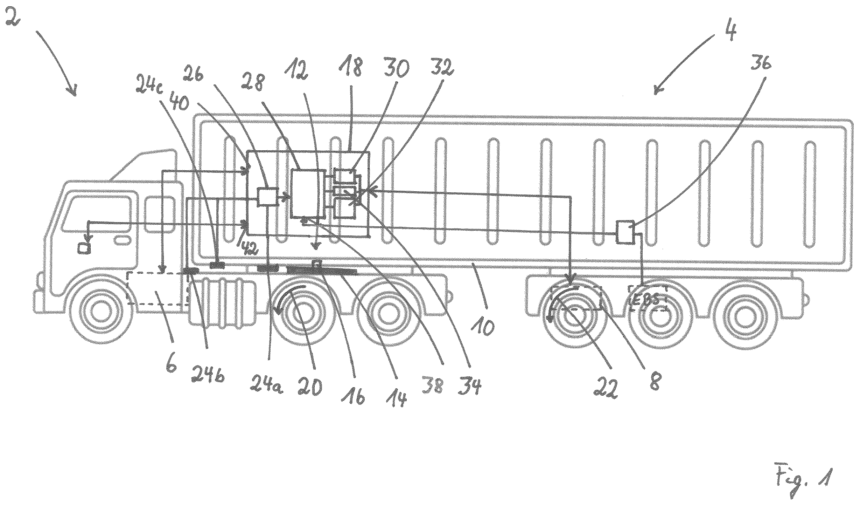

Weitere Vorteile und Einzelheiten ergeben sich aus den Unteransprüchen und einem in der beigefügten Zeichnung dargestellten Ausführungsbeispiel mit weiteren Details. Die Fig. 1 zeigt eine Prinzipskizze eines aus einer Zugmaschine 2 und einem angehängten Nutzfahrzeug 4 bestehenden Gespanns.

Bei den Darstellungen handelt es sich im Wesentlichen um konkrete Ausführungsbeispiele. Die Erfindung ist hingegen nicht auf die dargestellten Ausführungsbeispiele beschränkt, sondern kann in fachmännischer Weise abgewandelt werden, um sie an einen bestimmten Anwendungsfall anzupassen.

Soweit dienlich sind in allen Figuren einander entsprechende Bauteile mit identischen Bezugsziffern bezeichnet. Aus Gründen der Übersichtlichkeit sind bei mehrfach auftretenden Bauteilen jedoch nicht stets alle mit Bezugsziffern versehen.

In Fig. 1 ist sind eine Zugmaschine 2 und ein angehängtes Nutzfahrzeug 4 als Gespann gezeigt. Die Zugmaschine 2 verfügt über einen in gestrichelten Linien angedeuteten Fahrantrieb 6, das angehängte Nutzfahrzeug 4 über einen ebenfalls in gestrichelten Linien angedeuteten eigenen elektromotorischen Antrieb 8. Im gezeigten Ausführungsbeispiel ist das angehängte Nutzfahrzeug 4 über eine Sattelkupplung 12 mit der Zugmaschine 2 verbunden. Die Sattelplatte 14 ist mit der Zugmaschine 2 und der Königszapfen 16 ist mit dem Rahmen 10 des angehängten Nutzfahrzeugs 4 verbunden. Der Königszapfen ist in der Sattelplatte gehalten, um die Zugkräfte zwischen der Zugmaschine 2 und dem angehängten Nutzfahrzeug 4 zu übertragen.

Der Fahrantrieb 6 der Zugmaschine 2 erzeugt eine Antriebsleistung 20, die in Fig. 1 mit einem bogenförmigen Pfeil angedeutet ist. Der elektromotorische Antrieb 8 des angehängten Nutzfahrzeugs 4 erzeugt eine Antriebsleistung 22, die ebenfalls mit einem bogenförmigen Pfeil angedeutet ist. Die Antriebsleistung 20 des Fahrantriebs 6 und die Antriebsleistung 22 des elektromotorischen Antriebs 8 werden über eine Steuerungseinrichtung 18 aufeinander abgestimmt. Eine Information über die aktuelle Antriebsleistung 20 des Fahrantriebs 6 erhält die Steuerungseinrichtung 18 über zumindest einen Schwingungssensor 24. Im Ausführungsbeispiel sind in Fig. 1 drei Beispiele für die Anbringung und Ausführung von Schwingungssensoren 24 gezeigt. Die Schwingungssensoren 24 übermitteln jeweils ein Sensorsignal, das von der Steuerungseinrichtung 18 zur Bestimmung eines Sollwerts 30 für die aktuelle Antriebsleistung des elektromotorischen Antriebs genutzt wird. Der Schwingungssensor 24a ist ein Körperschallsensor, der am Rahmen 10 des angehängten Nutzfahrzeugs 4 angebracht ist. Schwingungen, die der Fahrantrieb 6 der Zugmaschine 2 erzeugt, werden über die Sattelplatte 14 und den Königszapfen 16 auf den Rahmen 10 übertragen. Der Schwingungssensor 24b ist ein weiterer Körperschallsensor, der am Fahrantrieb 6 der Zugmaschine 2 befestigt ist. Auch dort können vom Fahrantrieb 6 erzeugte Schwingungen als Körperschall oder auch akustisch gut gemessen werden. Bei dem Schwingungssensor 24c handelt es sich um ein Mikrofon, das akustisch hörbare Schallwellen aufnimmt und an der Unterseite des Rahmens 10 des angehängten Nutzfahrzeugs 4 befestigt ist. Die Schwingungssensoren 24a, 24c sind im vorderen Bereich des angehängten Nutzfahrzeugs 4 und der Schwingungssensor 24b ist an der Zugmaschine 2 positioniert. Sie befinden sich damit in der Nähe des Fahrantriebs 6, dessen Schwingungen über die Schwingungssensoren 24 erfasst werden sollen.

Die Schwingungssensoren 24 stellen eine Sensorik dar, die mit der Steuerungseinheit 18 verbunden ist. Die von den Schwingungssensoren 24 erfassten Schwingungen werden als Eingangssignal 26 an den Algorithmus 28 übertragen, der als Software ein Bestandteil der Steuerungseinrichtung 18 ist. Die Steuerungseinrichtung 18 ermittelt softwaregestützt einen Sollwert 30 für die Antriebsleistung des elektromotorischen Antriebs 8. Der Sollwert 30 wird von der Steuerungseinrichtung 18 mit dem aktuellen Istwert 32 der Antriebsleistung des elektromotorischen Antriebs 8 verglichen. Bei einer Differenz zwischen dem Sollwert 30 und dem Istwert 32 generiert die Steuerungseinrichtung 18 über den Algorithmus 28 ein Signal 34 zur Anpassung der Antriebsleistung des elektromotorischen Antriebs 8 und übermittelt dieses Signal 34 an den elektromotorischen Antrieb 8. Wenn nur der Sollwert 30 verändert wird, kann auch dieser veränderte Sollwert 30 als Signal 34 an den elektromotorischen Antrieb 8 übertragen werden.

Nicht immer sind die aus den Sensordaten der Schwingungssensoren 24 abgeleiteten Informationen eindeutig zu interpretieren. Es kann deshalb sinnvoll sein, die Daten zu Zustandsgrößen 36 - beispielsweise aus dem EBS - zur Plausibilisierung der Daten aus dem Eingangssignal 26 zu verwenden. Das angehängten Nutzfahrzeug 4 ist im Ausführungsbeispiel mit einem EBS ausgestattet. Das EBS generiert Daten über Zustandsgrößen 36, die über die Schnittstelle 38 an die Steuerungseinheit 18 übermittelt werden. Bei den vom EBS gelieferten Zustandsgrößen 36 kann es sich beispielsweise um Daten über die Raddrehzahl/Geschwindigkeit des angehängten Nutzfahrzeugs 4, die Achslast, ein Bremssignal und dergleichen handeln. Über weitere Sensoren, die unabhängig vom EBS im angehängten Nutzfahrzeug 4 angeordnet sein können, können Messdaten zu weiteren Zustandsgrößen 36 generiert werden, wie beispielsweise den Wind, das Wetter und dergleichen. Die Steuerungseinheit 18 kann die Daten der Zustandsgrößen 36 mit den Eingangssignalen 26 kombinieren, um daraus eine Information über die aktuelle Antriebsleistung 20 des Fahrantriebs 6 zu generieren und auf dieser Information aufbauend einen Sollwert 30 für die Antriebsleistung 22 des elektromotorischen Antriebs 8 zu bestimmen. Wenn die Eingangssignale 26 eine Erhöhung der Antriebsleistung 20 signalisieren und die Daten über die Raddrehzahl aus dem EBS eine steigende Geschwindigkeit melden, sind diese Daten plausibel zueinander, und der Algorithmus 28 kann einen Sollwert 30 ausgeben, der für eine Erhöhung der Antriebsleistung 22 des elektromotorischen Antriebs 8 steht. Dann würde der elektromotorische Antrieb 8 die Beschleunigung des Gespanns durch den Fahrantrieb 6 unterstützen.

Bei der Kombination der Daten aus dem Eingangssignal 26 und den Daten aus den Zustandsgrößen 36 kann es allerdings zu Situationen kommen, in denen sich die verfügbaren Daten zumindest scheinbar widersprechen. So würden eine aus den Eingangssignalen 26 abgeleitete Information über eine aktuell steigende Antriebsleistung des Fahrantriebs 6 und eine sich den EBS-Daten zu entnehmende aktuell verringernde Raddrehzahl nicht zueinander passen. Die steigende Antriebsleistung 20 des Fahrantriebs 6 würde dafür sprechen, den Sollwert 30 ebenfalls zu erhöhen, um darüber auch die Antriebsleistung 22 des elektromotorischen Antriebs 8 zu erhöhen. Weil aber eine steigende Antriebsleistung 20 eigentlich zu einer aktuellen Beschleunigung des Gespanns führen müsste, die Raddrehzahl-Daten des EBS aber eine gleichbleibende oder aktuell sinkende Fahrgeschwindigkeit signalisieren, spricht das gegen eine Erhöhung des Sollwerts 30. eine solche Situation würde sich beispielsweise einstellen, wenn das Gespann eine Steigungsstrecke hinauffährt. Bei sich widersprechenden Daten ist es im Zweifel sicherer, die Antriebsleistung 22 des elektromotorischen Antriebs 8 zu verringern oder diese ganz abzuschalten. Wenn allerdings noch zusätzliche Sensoren vorhanden sind, wie beispielsweise die Messdaten von einem Neigungssensor, die die beiden vorstehenden Informationen plausibilisiert, kann der Sollwert 30 trotz der scheinbaren Implausibilität erhöht werden. Eine Plausibilisierung ergibt sich beispielsweise, wenn der Neigungssensor die Information gibt, dass die Straße, auf der sich das Gespann bewegt, ansteigt. Durch die Kombination der Daten aus verschiedenen Sensoren ergibt sich eine bessere Qualität der Rechenergebnisse bei der Bestimmung des Sollwerts 30.

Die Steuerungseinrichtung 18 kann eine Schnittstelle 40 zur Zugmaschine 2 aufweisen, über die Betriebsdaten der Zugmaschine 2 an die Steuerungseinrichtung 18 übertragbar sind. Außerdem kann der Algorithmus 28 eine Schnittstelle 42 zur Eingabe oder Auswahl von Regelungsstrategien aufweisen.

### Bezugszeichenliste

- 2: Zugmaschine
- 4: angehängtes Nutzfahrzeug
- 6: Fahrantrieb der Zugmaschine
- 8: elektromotorischer Antrieb des Nutzfahrzeugs
- 10: Rahmen
- 12: Sattelkupplung
- 14: Sattelplatte
- 16: Königszapfen
- 18: Steuerungseinrichtung
- 20: Antriebsleistung des Fahrantriebs
- 22: Antriebsleistung des elektromotorischen Antriebs
- 24: Schwingungssensor
- 26: Eingangssignal
- 28: Algorithmus
- 30: Sollwert
- 32: Istwert
- 34: Signal
- 36: Zustandsgröße
- 38: Schnittstelle
- 40: Schnittstelle
- 42: Schnittstelle

## Patentansprüche

1. Verfahren zur Leistungsregelung eines elektromotorischen Antriebs (8) eines Nutzfahrzeugs (4), das an eine mit einem Fahrantrieb (6) versehene Zugmaschine (2) angehängt ist,
- zur Leistungsregelung wird eine Steuerungseinrichtung (18) verwendet, die softwaregestützt einen Sollwert (30) für die Antriebsleistung (22) des elektromotorischen Antriebs (8) ermittelt, diesen mit dem aktuellen Istwert (32) der Antriebsleistung (22) des elektromotorischen Antriebs (8) vergleicht, bei einer Differenz zwischen dem Sollwert (30) und dem Istwert (32) ein Signal (34) zur Anpassung der Antriebsleistung des elektromotorischen Antriebs (8) generiert und dieses Signal (34) an den elektromotorischen Antrieb (8) übermittelt,
- zur Ermittlung des Sollwerts (30) ist die Steuerungseinrichtung (18) mit einer Sensorik verbunden, die ein Sensorsignal übermittelt, das von der Steuerungseinrichtung (18) zur Bestimmung eines Sollwerts (30) für die aktuelle Antriebsleistung (20) der Zugmaschine (2) genutzt wird,
**dadurch gekennzeichnet, dass**
- die Sensorik einen Schwingungssensor (24) aufweist, der die vom Fahrantrieb (6) der Zugmaschine (2) erzeugten Schwingungen erfasst, und
- die vom Schwingungssensor (24) erfassten Schwingungen als Eingangssignal (26) an eine Steuerungseinrichtung (18) übertragen werden, die einen Algorithmus (28) zur Auswertung des Eingangssignals (26) aufweist, der aus dem Eingangssignal (26) einen Wert bestimmt, der in die Bestimmung eines die aktuelle Antriebsleistung (20) der Zugmaschine (2) repräsentierenden Wertes einfließt.

2. Verfahren nach Anspruch 1, **dadurch gekennzeichnet, dass** der Schwingungssensor (24) darauf ausgelegt ist, einen akustischen Schall und/oder einen Körperschall zu erfassen.

3. Verfahren nach Anspruch 1 oder 2, **dadurch gekennzeichnet, dass** der Schwingungssensor (24) und/oder der Algorithmus (28) das Eingangssignal (26) durch Hochpass- und/oder Tiefpassfilter aufbereiten.

4. Verfahren nach einem der vorhergehenden Ansprüche, **dadurch gekennzeichnet, dass** der Algorithmus (28) darauf ausgelegt ist, aus dem Eingangssignal (26) bestimmte Frequenzbereiche einer Auswertung zu unterziehen.

5. Verfahren nach einem der vorhergehenden Ansprüche, **dadurch gekennzeichnet, dass** der Algorithmus (28) darauf ausgelegt ist, das Eingangssignal (26) mittels einer Fourier-Transformation zu zerlegen.

6. Verfahren nach einem der vorhergehenden Ansprüche, **dadurch gekennzeichnet, dass** der Algorithmus (28) das Eingangssignal (26) auf darin enthaltene Frequenzen und Amplituden auswertet.

7. Verfahren nach einem der vorhergehenden Ansprüche, **dadurch gekennzeichnet, dass** der Algorithmus (28) das Eingangssignal (26) auf eine Periodizität und/oder zeitliche Änderungen von Frequenzen und Amplituden auswertet.

8. Verfahren nach einem der vorhergehenden Ansprüche, **dadurch gekennzeichnet, dass** der Algorithmus (28) das Eingangssignal (26) durch eine Fuzzy Logic-Analyse auswertet.

9. Verfahren nach einem der vorhergehenden Ansprüche, **dadurch gekennzeichnet, dass** der Algorithmus (28) darauf ausgelegt ist, über eine Schnittstelle (38) zusätzlich Zustandsgrößen (36) des angehängten Nutzfahrzeugs (4) zu erfassen und in die Bestimmung eines die aktuelle Antriebsleistung (20) der Zugmaschine (2) repräsentierenden Wertes und/oder des Signals (34) zur Anpassung der Antriebsleistung (22) des elektromotorischen Antriebs (8) einzubeziehen.

10. Verfahren nach Anspruch 9, **dadurch gekennzeichnet, dass** der Algorithmus (28) darauf ausgelegt ist, bereitgestellte Zustandsgrößen (36) bedarfsweise in einen Wert für die Beschleunigungsleistung und/oder eine Neigung des angehängten Nutzfahrzeugs (4) und/oder ein Gesamtgewicht und/oder einen statischen Rollwiderstand des angehängten Nutzfahrzeugs (4) zu verrechnen und zumindest einen dieser Werte bei der Bestimmung eines die aktuelle Antriebsleistung (20) der Zugmaschine (2) repräsentierenden Wertes und/oder des Signals (34) zur Anpassung der Antriebsleistung (22) des elektromotorischen Antriebs (8) zu verwenden.

11. Verfahren nach einem der vorhergehenden Ansprüche, **dadurch gekennzeichnet, dass** die Steuerungseinrichtung (18) den elektromotorischen Antrieb (8) des angehängten Nutzfahrzeugs (4) in einer Initiierungsphase auf eine reduzierte Antriebsleistung (22) drosselt oder den elektromotorischen Antrieb (8) inaktiv schaltet.

12. Verfahren nach einem der vorhergehenden Ansprüche, **dadurch gekennzeichnet, dass** der Algorithmus (28) in einer Initiierungsphase zumindest ein fahrzeugspezifisches Schwingungsprofil generiert.

13. Verfahren nach einem der vorhergehenden Ansprüche, **dadurch gekennzeichnet, dass** die Steuerungseinrichtung (18) eine Schnittstelle (40) zur Zugmaschine (2) aufweist, über die Betriebsdaten der Zugmaschine (2) an die Steuerungseinrichtung (18) übertragbar sind, und der Algorithmus (28) darauf ausgelegt ist, dass über die Schnittstelle (40) zur Zugmaschine (2) eingelesene Betriebsdaten der Zugmaschine (2) in die Bestimmung eines die aktuelle Antriebsleistung (20) der Zugmaschine (2) repräsentierenden Wertes und/oder des Signals (34) zur Anpassung der Antriebsleistung (22) des elektromotorischen Antriebs (8) einfließt.

14. Verfahren nach einem der vorhergehenden Ansprüche, **dadurch gekennzeichnet, dass** der Algorithmus (28) einen mathematischen Regler zur Schwingungsdämpfung aufweist, mit dem der die aktuelle Antriebsleistung (20) der Zugmaschine (2) repräsentierende Wert und/oder das Signal (34) zur Anpassung der Antriebsleistung (22) des elektromotorischen Antriebs (8) korrigiert wird.

15. Verfahren nach einem der vorhergehenden Ansprüche, **dadurch gekennzeichnet, dass** der Schwingungssensor (24) im vorderen Bereich des angehängten Nutzfahrzeugs (4) und/oder an der Zugmaschine (2) positioniert ist.

16. Verfahren nach einem der vorhergehenden Ansprüche, **dadurch gekennzeichnet, dass** der Algorithmus (28) eine Schnittstelle (42) zur Eingabe oder Auswahl von Regelungsstrategien aufweist.

17. Verfahren nach einem der vorhergehenden Ansprüche, **dadurch gekennzeichnet, dass** der Algorithmus (28) eine Bremsvorrangsteuerung aufweist, in der die Regelung der Antriebsleistung (22) des elektromotorischen Antriebs (8) bei Vorliegen eines Bremssignals an den Bremsvorgang angepasst ist.

18. Verfahren nach einem der vorhergehenden Ansprüche, **dadurch gekennzeichnet, dass** der Algorithmus (28) bei der Bestimmung eines Sollwerts (30) für die Antriebsleistung des elektromotorischen Antriebs (8) einen dynamischen oder statischen Wert für den Rollwiderstand berechnet und einen Sollwert (30) ausgibt, der unterhalb des errechneten Wertes für den Rollwiderstand liegt.

19. Nutzfahrzeug (4) mit einem elektromotorischen Antrieb (8) und einer Steuerungseinrichtung (18) zur Steuerung des elektromotorischen Antriebs (8), **dadurch gekennzeichnet, dass** die Steuerungseinrichtung (18) darauf ausgelegt ist, das Verfahren nach einem der vorhergehenden Ansprüche anzuwenden.

20. Nutzfahrzeug (4) nach Anspruch 19, **dadurch gekennzeichnet, dass** es sich bei dem Nutzfahrzeug (4) um einen Sattelauflieger handelt, der über einen Königszapfen mit einer Sattelzugmaschine (2) verbindbar ist.
